# EUROPEAN PATENT APPLICATION

(11) **EP 2 597 852 A1**
(43) Date of publication of application: **29.05.2013**
(21) Application number: 11852117.8
(22) Date of filing: 22.12.2011
(51) Int. Cl.: H04M 15/00, H04W 4/26

(54) **COMMUNICATION CONTROL SYSTEM AND COMMUNICATION CONTROL METHOD**

(30) Priority: 24.12.2010 JP 2010288786
(71) Applicant: NTT DOCOMO, INC., Chiyoda-ku Tokyo 100-6150 (JP)
(72) Inventor: WAKUI Michiko, Tokyo 100-6150 (JP); KITAJIMA Yasuhiro, Tokyo 100-6150 (JP)
(74) Representative: Beder, Jens
(86) International application number: PCT/JP2011/079887
(87) International publication number: WO 2012/086786

(57) **Abstract**

A communication control system (1) includes a communication status measurement unit (32) measuring communication history data, a communication history transmitting unit (34) transmitting the communication history data with user identification information, a remaining communication amount information storage unit (52) prestoring user identification information and remaining communication amount data in association, a communication history receiving unit (53), a communication history adding unit (54) adding up the communication history data respectively corresponding to the user identification information, a communication amount comparison unit (55) comparing the remaining communication amount data with an added result, and a restriction signal transmitting unit (56) transmitting a control signal for restricting communications.

## Description

### Technical Field

The present invention relates to a communication control system and a communication control method that control a communication service provided to terminals through a communication network.

### Background Art

It has been practiced to make communication restriction control according to the amount of data exchanged between a terminal and a communication network and the communication time during which a terminal and a communication network are connected or the like in accordance with the service contract of a user who uses a communication service using the communication network. For example, as a technique to implement a prepaid service that allows a user to pay (charge) a fee in advance and receive a communication service, a technique in which, when the available balance of a mobile terminal device becomes zero, a mobile terminal management system makes a communication service unavailable to the mobile terminal device is disclosed (see Patent Literature 1).

### Citation List

### Patent Literature

PTL 1: Japanese Unexamined Patent Application Publication No. 2001-313743

### Summary of Invention

### Technical Problem

However, in the communication control method according to the related art described above, when one individual user or corporate user makes a connection to a communication network using a plurality of user identification information such as telephone numbers and IP addresses, it is difficult to figure out the amount of data and the communication time on a user-by-user basis and make communication restriction control. Particularly in recent years, it has become common to use a communication service with various types of terminals such as a mobile phone, PDA (Personal Digital Assistant), smartphone and mobile PC, and there is an increasing necessity for a framework to control the restrictions of a communication service in units of groups including a plurality of terminals.

The present invention has been accomplished to solve the above problems and an object of the present invention is thus to provide a communication control system and a communication control method that make communication control on a user-by-user basis who uses a plurality of terminals and thereby enhance the convenience of using a communication service.

### Solution to Problem

To solve the above problem, a communication control system according to one aspect of the present invention is a communication control system including a plurality of switches that relay communication data exchanged between a plurality of terminals and another party and a control device that is connected to the plurality of switches and controls communications between the terminals and the other party, and each of the plurality of switches includes a communication status measurement means for measuring communication history data indicating a communication history between each terminal and the other party, and a communication history transmitting means for transmitting the communication history data of each terminal measured by the communication status measurement means together with user identification information identifying a user of the terminal to the control device, and the control device includes a remaining communication amount information storage means for previously storing a plurality of user identification information and remaining communication amount data indicating a remaining amount of communication available in association with each other, a communication history receiving means for receiving the communication history data with the user identification information added from the plurality of switches, a communication history adding means for referring to the remaining communication amount information storage means based on a plurality of user identification information received by the communication history receiving means and, when the plurality of user identification information are stored in association with each other, adding up a plurality of communication history data received corresponding to the plurality of user identification information, a communication amount comparison means for reading the remaining communication amount data corresponding to the plurality of user identification information from the remaining communication amount information storage means and comparing the remaining communication amount data with an added result by the communication history adding means, and a restriction signal transmitting means for transmitting a control signal for restricting communications by the terminals specified by the plurality of user identification information based on a comparison result acquired by the communication amount comparison means.

Alternatively, a communication control method according to one aspect of the present invention is a communication control method using a plurality of switches that relay communication data exchanged between a plurality of terminals and another party and a control device that is connected to the plurality of switches and controls communications between the terminals and the other party, the method including a communication status measurement step of measuring communication history data indicating a communication history between each terminal and the other party by each of the plurality of switches, a communication history transmitting step of transmitting the communication history data of each terminal measured in the communication status measurement step together with user identification information identifying a user of the terminal to the control device by each of the plurality of switches, a remaining communication amount information storage step of previously storing a plurality of user identification information and remaining communication amount data indicating a remaining amount of communication available in association with each other into a remaining communication amount information storage means of the control device, a communication history receiving step of receiving the communication history data with the user identification information added from the plurality of switches by a communication history receiving means of the control device, a communication history adding step of referring to the remaining communication amount information storage means based on a plurality of user identification information received by the communication history receiving means and, when the plurality of user identification information are stored in association with each other, adding up a plurality of communication history data received corresponding to the plurality of user identification information by a communication history adding means of the control device, a communication amount comparison step of reading the remaining communication amount data corresponding to the plurality of user identification information from the remaining communication amount information storage means and comparing the remaining communication amount data with an added result by the communication history adding means by a communication amount comparison means of the control device, and a restriction signal transmitting step of transmitting a control signal for restricting communications by the terminals specified by the plurality of user identification information based on a comparison result acquired by the communication amount comparison means by a restriction signal transmitting means of the control device.

According to the communication control system or the communication control method of the above aspect, the switches that relay communications by a plurality of terminals measure communication history data indicating communication histories of the plurality of terminals and transmit the communication history data together with user identification information to the control device, and the control device adds up the communication history data corresponding to a plurality of user identification information, compares the added result with the remaining communication amount data prestored in association with the plurality of user identification information and, according to the comparison result, restricts the communications specified by the plurality of user identification information. It is thereby possible to provide a communication service that imposes communication restrictions in accordance with the communication history on a user-by-user basis who uses a plurality of terminals. This allows a user to receive a communication service using a plurality of terminals in accordance with service provision conditions of each user determined by the communication time, the amount of communication data, the frequency of communication or the like, thereby enhancing the convenience of a user.

The restriction signal transmitting means may transmit a disconnection signal for disconnecting communication connections by the terminals based on the comparison result. In this case, because communication connections are disconnected in accordance with the communication history such as the communication time or the amount of communication data added up for each group of a plurality of user identification information, it is possible to provide a communication service that allows a user using a plurality of terminals to make communication connections until reaching a specified amount of communication data or communication time.

The restriction signal transmitting means may transmit a control signal for controlling a communication speed in communications by the terminals based on the comparison result. In this case, because a communication speed is controlled in accordance with the communication history such as the communication time or the amount of communication data added up for each group of a plurality of user identification information, it is possible to provide a communication service that switches a communication speed upon reaching a specified amount of communication data or communication time.

### Advantageous Effects of Invention

According to the present invention, it is possible to make communication control on a user-by-user basis who uses a plurality of terminals and thereby enhance the convenience of using a communication service.

### Brief Description of Drawings

Fig. 1 is a schematic configuration diagram of a communication control system 1 according to an embodiment of the present invention.
Fig. 2 is a block diagram showing functional configurations of SGSNs 3a and 3B and HLR 5 in Fig. 1.
Fig. 3 is a diagram showing an example of structure of remaining communication amount data stored in a remaining communication amount information storage unit 52 in Fig. 2.
Fig. 4 is a flowchart showing an operation of the communication control system 1 according to an embodiment of the present invention.
Fig. 5 is a flowchart showing an operation of the communication control system 1 according to an alternative example of the present invention.
Fig. 6 is a flowchart showing an operation of the communication control system 1 according to an alternative example of the present invention.

### Description of Embodiments

A preferred embodiment of a communication control system according to the present invention is described hereinafter with reference to the drawings. Note that, in the following description, the same or equivalent elements are denoted by the same reference numerals and repeated explanation thereof is omitted.

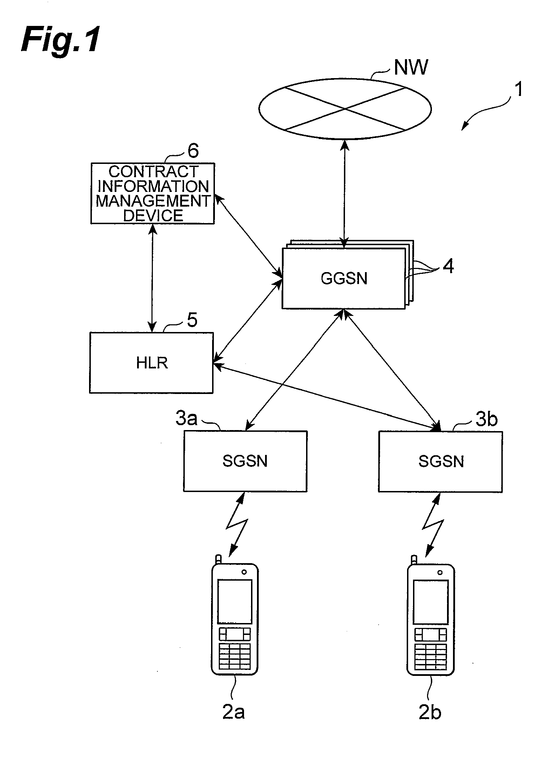

Fig. 1 is a schematic configuration diagram of a communication control system 1 according to an embodiment of the present invention. The communication control system 1 is a communication system that enables data transmission using GPRS (General Packet Radio Service) technology, and it includes a plurality of GGSNs (Gateway GPRS Support Nodes) 4 which are gateway switches that connect different communication networks NW, a plurality of SGSNs (Serving GPRS Support Nodes) 3a and 3b which are switches that are connected to the GGSNs 4 and have an access control function, packet switching function and the like, an HLR (Home Location Register) 5 which is a control device that is connected to the SGSNs 3a and 3b and the GGSNs 4 and perform various operations for communication control, and a contract information management device 6 that manages user's contract information.

In this communication control system 1, a plurality of mobile communication terminals 2a and 2b can receive a data communication service such as a packet switching service by connecting to any of the SGSNs 3a and 3b according to their locations. Note that, when the plurality of mobile communication terminals 2a and 2b use an audio communication service, they can receive a communication service by connecting to a VLR (Visitor Location Register), instead of the SGSN. The mobile communication terminals 2a and 2b are mobile client terminals used by users who desire to receive a communication service using the communication control system 1, and they may be terminal devices such as mobile phones, smartphones, portable personal computers and PDAs (Personal Digital Assistants).

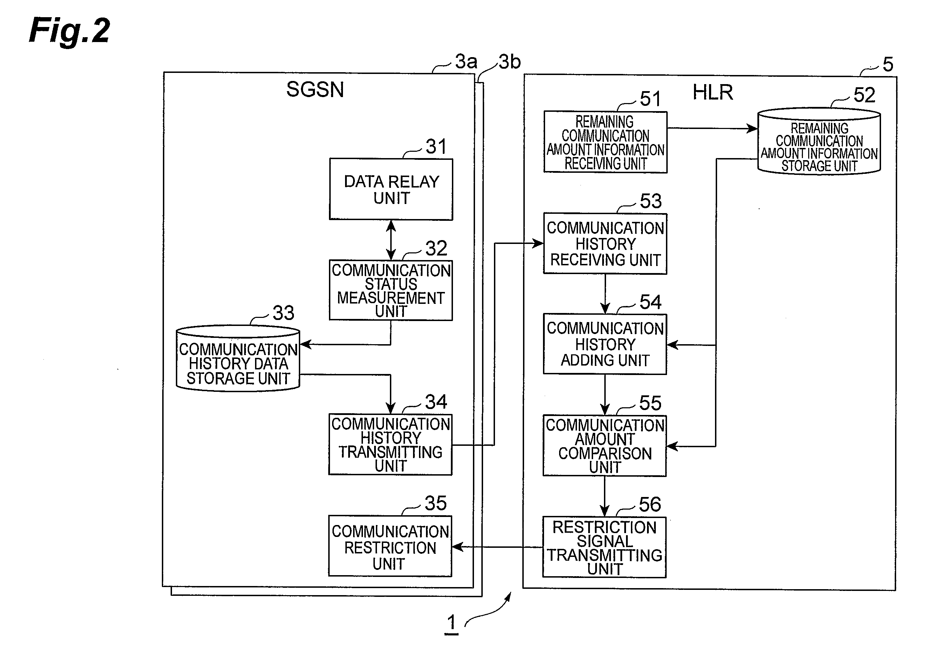

The configurations of the SGSNs 3a and 3b and the HLR 5 are described hereinafter in detail with reference to Fig. 2.

The SGSNs 3a and 3b each include, as common functional components, a data relay unit 31, a communication status measurement unit (communication status measurement means) 32, a communication history data storage unit 33, a communication history transmitting unit (communication history transmitting means) 34, and a communication restriction unit 35.

The data relay unit 31 relays packet communication data exchanged between the mobile communication terminal 2a, 2b and the other party. Specifically, the data relay unit 31 transmits packet communication data transmitted from the mobile communication terminal 2a, 2b to the other party through the GGSN 4 and the communication network NW connected thereto, and transmits packet communication data addressed to the mobile communication terminal 2a, 2b transmitted from the other party through the communication network NW the GGSN 4 to the mobile communication terminal 2a, 2b.

The communication status measurement unit 32 measures the amount of packet communication data exchanged between the mobile communication terminal 2a, 2b and the other party, the communication time of packet communication performed between the mobile communication terminal 2a, 2b and the other party, or the frequency (number) of packet communication performed between the mobile communication terminal 2a, 2b and the other party. Then, the communication status measurement unit 32 temporarily stores communication history data containing the measured amount of data, communication time or frequency of communication, together with user identification information of a user of the mobile communication terminal 2a, 2b specified from the packet communication data, into the communication history data storage unit 33. As the user identification information, an identification number such as a telephone number or an IP address is used.

The communication history transmitting unit 34 transmits the communication history data related to the mobile communication terminals 2a and 2b stored in the communication history data storage unit 33 together with the user identification information added to the communication history data to the HLR 5 at predetermined timing. For example, the communication history transmitting unit 34 transmits the communication history data at regular timing, at timing when the communication by the mobile communication terminal 2a, 2b is disconnected, or at timing requested from the HLR 5.

The communication restriction unit 35 makes control to impose communication restrictions on the mobile communication terminals 2a and 2b in accordance with a restriction control signal transmitted from the HLR 5. For example, when the mobile communication terminals 2a and 2b are being connected to the communication control system 1, the communication restriction unit 35 makes control to forcibly disconnect the connection. On the other hand, when the mobile communication terminals 2a and 2b are not connected to the communication control system 1, the communication restriction unit 35 restricts transmission from the mobile communication terminals 2a and 2b and reception by the mobile communication terminals 2a and 2b. Further, the communication restriction unit 35 may make control to restrict the communication speed of packet data communication by the mobile communication terminals 2a and 2b to be lower than a predetermined speed.

The HLR 5 includes a remaining communication amount information receiving unit 51, a remaining communication amount information storage unit (remaining communication amount information storage means) 52, a communication history receiving unit (communication history receiving means) 53, a communication history adding unit (communication history adding means) 54, a communication amount comparison unit (communication amount comparison means) 55, and a restriction signal transmitting unit (restriction signal transmitting means) 56.

The remaining communication amount information receiving unit 51 receives contract information from the contract information management device 6 that manages contract information of users of the mobile communication terminals 2a and 2b. For example, when users of the mobile communication terminals 2a and 2b are using a communication service (which is referred to hereinafter as "prepaid service") which users can receive after paying (charging) a fee in advance, the remaining communication amount information receiving unit 51 receives contract information containing information about the remaining amount of communication available currently, such as the remaining amount of communication data that can be transmitted and received, the remaining communication time available, and the remaining number of communications available. On the other hand, when users of the mobile communication terminals 2a and 2b are using a communication service (which is referred to hereinafter as "communication restriction service") which imposes restrictions in communication speed or restrictions in transmission when exceeding a specified communication data amount or communication time, the remaining communication amount information receiving unit 51 receives contract information containing information about the remaining amount of communication serving as a threshold for restrictions in speed or restrictions in transmission, such as the remaining amount of communication data and the remaining communication time. The contract information may be received at timing when the contract information is updated in the contract information management device 6 or received at regular timing. Further, the remaining communication amount information receiving unit 51 stores the received contract information in association with a plurality of user identification information for identifying users of the users of the mobile communication terminals 2a and 2b into the remaining communication amount information storage unit 52.

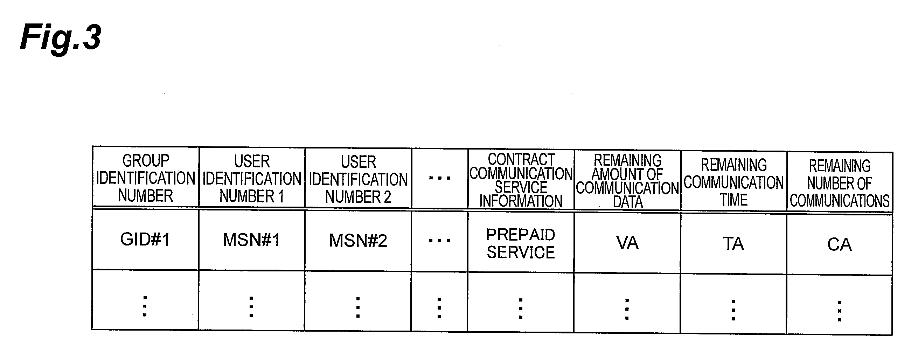

Fig. 3 shows an example of structure of data stored in the remaining communication amount information storage unit 52. As shown therein, in the remaining communication amount information storage unit 52, "contract communication service information: prepaid service" that specifies a communication service contracted by users of the mobile communication terminals 2a and 2b, "remaining amount of communication data: VA". "remaining communication time: TA", and "remaining number of communications: CA" are stored in association with "user identification number 1: MSN#1" and "user identification number 2: MSN#2", which are user identification information of the mobile communication terminals 2a and 2b. Further, "group identification number: GID#1" for uniquely identifying such a combination of user identification numbers is also stored in association. Note that, when a user has three or more user identification numbers for one contract, three or more user identification information may be associated with one contract communication service information as a matter of course. Further, with one contract communication service information, either one of the remaining amount of communication data and the remaining communication time may be associated.

The communication history receiving unit 53 receives the communication history data to which user identification information is added from the communication history transmitting unit 34 of a plurality of SGSNs 3a and 3b. Specifically, the communication history receiving unit 53 receives the communication history data at regular timing or at timing when the communication by the mobile communication terminal 2a, 2b is disconnected. The communication history data contains, for example, the amount of packet communication data exchanged between the mobile communication terminal 2a, 2b and the other party, the communication time of packet communication performed between the mobile communication terminal 2a, 2b and the other party, the number of packet communications performed between the mobile communication terminal 2a, 2b and the other party or the like. The communication history receiving unit 53 outputs the received communication history data to the communication history adding unit 54 each time.

The communication history adding unit 54 adds up a plurality of communication history data received by the communication history receiving unit 53 at regular timing or at timing when a specified amount of data is received. Specifically, the communication history adding unit 54 refers to the remaining communication amount information storage unit 52 based on the respective user identification information added to the plurality of communication history data and reads a data record related to the "contract communication service information" containing user identification numbers that match or correspond to the user identification information from the remaining communication amount information storage unit 52. Then, the communication history adding unit 54 determines whether the user identification numbers respectively corresponding to the plurality of user identification information are associated with each other in one data record containing "contract communication service information". To be more specific, the communication history adding unit 54 determines whether a common group identification number is assigned to the plurality of user identification numbers in one data record. Further, the communication history adding unit 54 adds up a plurality of communication history data corresponding to the user identification numbers associated with each other in the data record containing "contract communication service information". For example, when the amount of packet communication data is contained in the communication history data, the communication history adding unit 54 adds up the amount of data and, when the communication time of packet communication is contained in the communication history data, the communication history adding unit 54 adds up the communication time. Further, the communication history adding unit 54 outputs the added total of the communication history data, together with the plurality of user identification numbers of the added-up data, to the communication amount comparison unit 55.

The communication amount comparison unit 55 refers to the remaining communication amount information storage unit 52 based on the plurality of user identification numbers of the added-up data received from the communication history adding unit 54 and reads the remaining amount of communication data, the remaining communication time or the remaining number of communications corresponding to those user identification numbers. The communication amount comparison unit 55 then compares the read remaining amount of communication data, the remaining communication time or the remaining number of communications with the added total of the communication history data and generates a comparison result. For example, when the communication amount comparison unit 55 has received the added total "SVA" of the amount of communication data related to two user identification numbers "MSN#1" and "MSN#2", it reads the remaining amount of communication data "VA" from the data as shown in Fig. 3 and compares the added total "SVA" of the amount of communication data with the remaining amount of communication data "VA". Further, when the added total of the communication history data exceeds the remaining amount of communication data, the remaining communication time or the remaining number of communications read from the remaining communication amount information storage unit 52, the communication amount comparison unit 55 outputs the comparison result, together with all user identification numbers contained in the contract communication service information of the added-up data, to the restriction signal transmitting unit 56.

When it is notified from the communication amount comparison unit 55 that the added total of the communication history data exceeds the remaining amount of communication data, the remaining communication time or the remaining number of communications, the restriction signal transmitting unit 56 generates a restriction control signal for restricting communications by the terminals specified by all user identification numbers contained in the comparison result. The restriction signal transmitting unit 56 then transmits the generated restriction control signal to the SGSNs 3a and 3b or the GGSN 4.

For example, when it is determined that the total value calculated for "contract communication service information: prepaid service" containing two user identification numbers "MSN#1" and "MSN#2" exceeds the remaining amount of communication data and when the mobile communication terminals 2a and 2b corresponding to the two user identification numbers "MSN#1" and "MSN#2" are performing data communication, the restriction signal transmitting unit 56 transmits a disconnection signal for disconnecting the communications by the mobile communication terminals 2a and 2b to the SGSNs 3a and 3b. On the other hand, when the same determination is made and when the mobile communication terminals 2a and 2b are not performing data communication, the restriction signal transmitting unit 56 transmits a restriction control signal for restricting transmission from the mobile communication terminals 2a and 2b and reception by the mobile communication terminals 2a and 2b to the SGSNs 3a and 3b or the GGSN 4. Further, when it is determined that the total value calculated for "contract communication service information: communication restriction service" containing two user identification numbers "MSN#1" and "MSN#2" exceeds a predetermined amount of data, the restriction signal transmitting unit 56 transmits a restriction control signal for restricting the communication speed of data communications by the mobile communication terminals 2a and 2b to a specified speed to the SGSNs 3a and 3b or the GGSN 4.

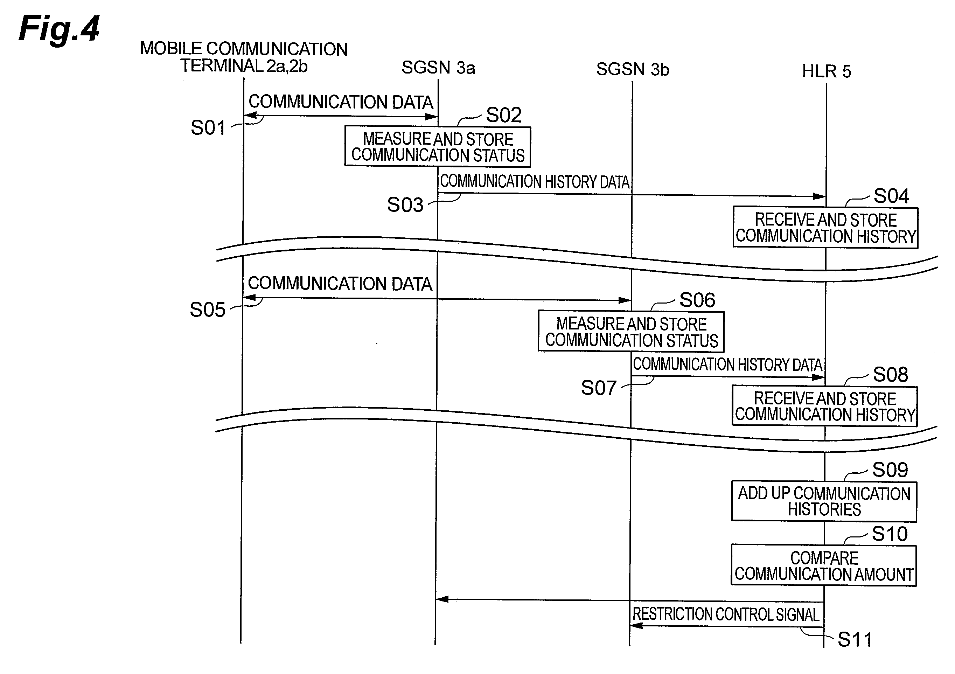

Hereinafter, the operation of the communication control system 1 is described and further a communication control method according to this embodiment is described in detail with reference to Fig. 4. Fig. 4 is a sequence chart showing an operation when the communication control system 1 makes communication control on the mobile communication terminals 2a and 2b.

First, assume that the mobile communication terminal 2a performs packet data communication and is connected to the SGSN 3a (Step S01). At this time, the amount of data or the communication time of the packet communication by the mobile communication terminal 2a is measured by the communication status measurement unit 32 of the SGSN 3a and temporarily stored (Step S02). After that, the communication history data containing the measurement result is transmitted by the communication history transmitting unit 34 of the SGSN 3a at timing when the communication by the mobile communication terminal 2a is disconnected or at timing requested from the HLR 5 (Step S03). The communication history data from the SGSN 3a is then received by the communication history receiving unit 53 of the HLR 5 and temporarily stored (Step S04).

Then, assume that the mobile communication terminal 2b performs packet data communication and is connected to the SGSN 3b (Step S05). At this time, the amount of data, the communication time or the number of communications of the packet communication by the mobile communication terminal 2b is measured by the communication status measurement unit 32 of the SGSN 3b and temporarily stored (Step S06). After that, the communication history data containing the measurement result is transmitted by the communication history transmitting unit 34 of the SGSN 3b at timing when the communication by the mobile communication terminal 2b is disconnected or at timing requested from the HLR 5 (Step S07). The communication history data from the SGSN 3b is then received by the communication history receiving unit 53 of the HLR 5 and temporarily stored (Step S08).

After that, the received plurality of communication history data are added up at regular timing by the communication history adding unit 54 of the HLR 5 (Step S09). When it is assumed that a user identification number assigned to the mobile communication terminal 2a is "MSN#1" and a user identification number assigned to the mobile communication terminal 2b is "MSN#2", those user identification numbers are associated with each other in one data record containing "contract communication service information" in the remaining communication amount information storage unit 52 (Fig. 3). Therefore, the communication history data for the mobile communication terminal 2a received from the SGSN 3a and the communication history data for the mobile communication terminal 2b received from the SGSN 3b are added up by the communication history adding unit 54. The added total is calculated as an accumulated value of the communication history data related to the packet communications performed by the mobile communication terminals 2a and 2b during a specified period (for example, one month). Next, the remaining amount of communication data, the remaining communication time or the remaining number of communications corresponding to the mobile communication terminals 2a and 2b are read from the remaining communication amount information storage unit 52, and the remaining amount of communication data, the remaining communication time or the remaining number of communications is compared with the added total of the communication history data by the communication amount comparison unit 55 of the HLR 5 (Step S10). When, as a result of the comparison, it is determined that the added total exceeds the remaining amount of communication data, the remaining communication time or the remaining number of communications, a restriction control signal for restricting the communications by the mobile communication terminals 2a and 2b is generated and transmitted to the SGSNs 3a and 3b or the GGSN 4 by the restriction signal transmitting unit 56 of the HLR 5 (Step S11).

According to the communication control system 1 and the communication control method described above, the SGSNs 3a and 3b that relay the communications by the mobile communication terminals 2a and 2b measure the communication history data indicating the communication histories of the mobile communication terminals 2a and 2b and transmit the communication history data together with user identification information to the HLR 5, and the HLR 5 adds up the communication history data corresponding to the user identification information assigned to the mobile communication terminals 2a and 2b, compares the added result with the remaining communication amount data prestored in association with those user identification information and, according to the comparison result, restricts the packet communications specified by those user identification information. It is thereby possible to provide a packet communication service that imposes communication restrictions in accordance with the communication history on a user-by-user basis who uses a plurality of terminals. This allows a user to receive a communication service using a plurality of terminals in accordance with service provision conditions of each user determined by the communication time, the amount of communication data, the number of communications or the like, thereby enhancing the convenience of a user.

Because the HLR 5 disconnects a communication connection in accordance with the communication history such as the communication time, the amount of communication data or the number of communications added up for each group of a plurality of user identification information, it is possible to provide a communication service that allows a user using a plurality of terminals to make a communication connection until reaching a specified amount of communication data, communication time or frequency of communication.

Further, because the HLR 5 controls a communication speed in accordance with the communication history such as the communication time, the amount of communication data or the number of communications added up for each group of a plurality of user identification information, it is possible to provide a communication service that switches a communication speed upon reaching a specified amount of communication data, communication time or frequency of communication.

Note that the above-described embodiment is a preferred embodiment of the communication control system according to the present invention, and the communication control system according to the present invention is not limited to the one described in the above embodiment. As the communication control system according to the present invention, the communication control system according to the embodiment may be modified or applied to others without departing from the scope of the invention described in each claims.

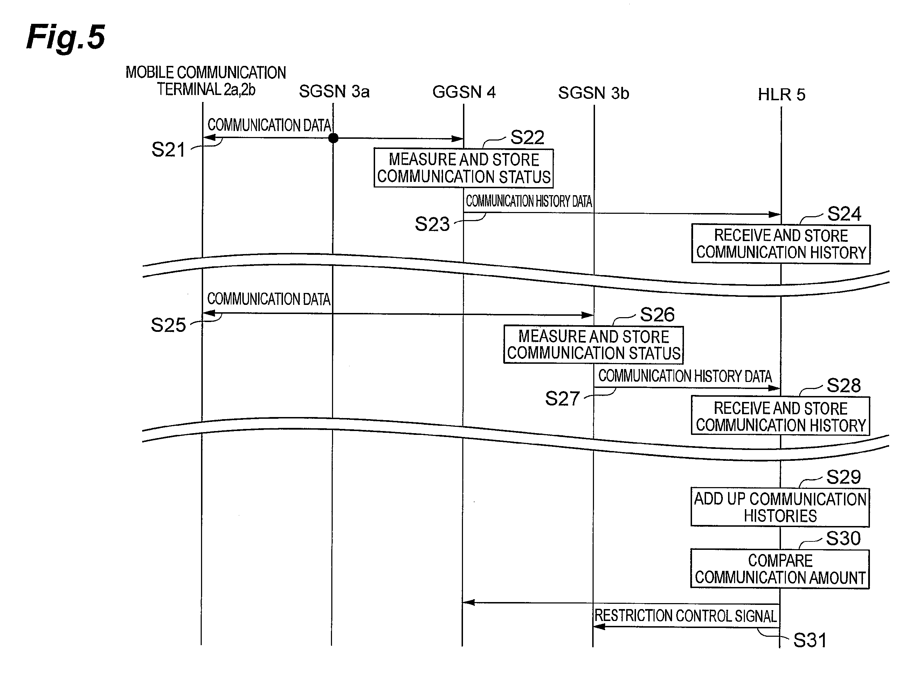

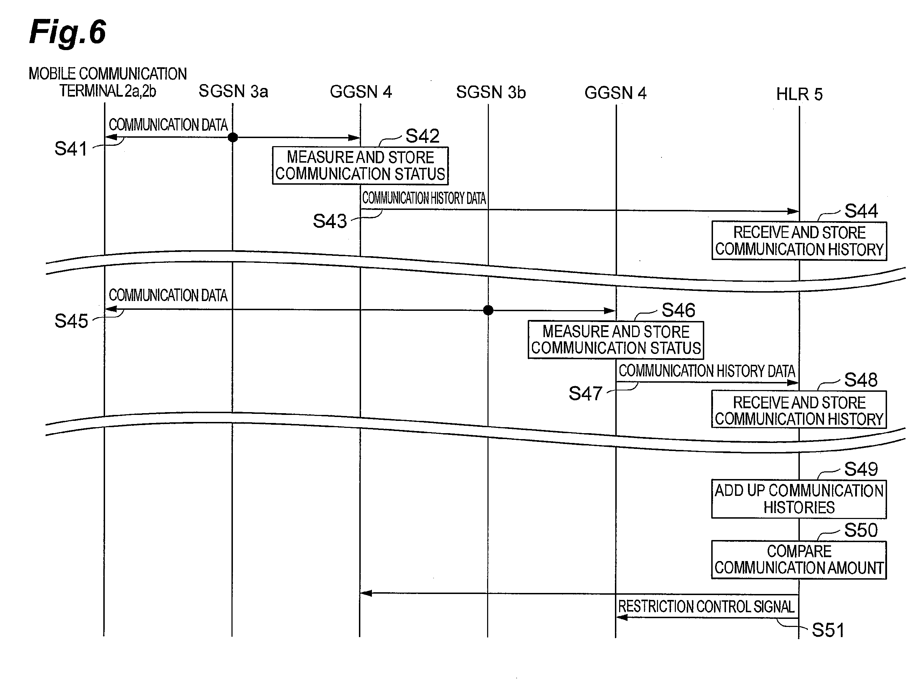

Specifically, all components included in the SGSN 3a, 3b described above may be included in the GGSN 4, which is a gateway switch. Figs. 5 and 6 show the operation of the communication control system according to an alternative example of the present invention.

In an alternative example shown in Fig. 5, only the operations in Steps S22 to S23 and S31 are different from the operations shown in Fig. 4, and the operations in the other Steps S21 and S24 to S30 are the same as the operations in Step S01 and S04 to S10 shown in Fig. 4. Specifically, when packet communication is performed by the mobile communication terminal 2a, the amount of data, the communication time or the number of communications of the packet communication is measured by the GGSN 4 that relays the packet communication data and temporarily stored (Step S22). After that, the communication history data containing the measurement result is transmitted to the HLR 5 by the GGSN 4 at timing when the communication by the mobile communication terminal 2a is disconnected or at timing requested from the HLR 5 (Step S23). Finally, a restriction control signal is transmitted from the HLR 5 to the SGSN 3b and the GGSN 4 (Step S31). This alternative example assumes the case where a plurality of SGSNs are set up and managed by different operators (telecommunications carriers), and in such a case also, it is possible to reliably acquire the added result of communication histories and make communication restriction control based on the result.

In another alternative example shown in Fig. 6, only the operations in Steps S42 to S43, S46 to S47 and S51 are different from the operations shown in Fig. 4, and the operations in the other Steps S41, S44 to S45 and S48 to S50 are the same as the operations in Step S01, S04 to S05 and S08 to S10 shown in Fig. 4. Specifically, when packet communication is performed by the mobile communication terminal 2a, the amount of data, the communication time or the number of communications of the packet communication is measured by one GGSN 4 that relays the packet communication data and temporarily stored (Step S42). After that, the communication history data containing the measurement result is transmitted to the HLR 5 by that GGSN 4 at timing when the communication by the mobile communication terminal 2a is disconnected or at timing requested from the HLR 5 (Step S43). On the other hand, when packet communication is performed by the mobile communication terminal 2b, the amount of data, the communication time or the number of communications of the packet communication is measured by another GGSN 4 that relays the packet communication data and temporarily stored (Step S46). After that, the communication history data containing the measurement result is transmitted to the HLR 5 by that GGSN 4 at timing when the communication by the mobile communication terminal 2b is disconnected or at timing requested from the HLR 5 (Step S47). Finally, a restriction control signal is transmitted from the HLR 5 to the two GGSNs 4 (Step S51). In this alternative example, communication histories can be added up and communication restriction control can be made by a plurality of gateway switches GGSNs 4.

In the above-described embodiment and its alternative examples, a communication system by the GPRS is mainly used. However, the present invention is not limited to such a communication system, and it is applicable as appropriate to a communication system that can communicate packet data. For example, it is applicable to a new communication system such as LTE (Long Term Evolution). In this case, an equivalent of the gateway switch GGSN 4 is P-GW (Packet Data Network Gateway), and an equivalent of the SGSN 3a, 3b is MME (Mobility Management Entity) or S-GW (Serving Gateway). Further, an equivalent of the HLR 5 and the contract information management device 6 is HSS (subscriber information management server: Home Subscriber System). Note that, as the HLR 5 and the contract information management device 6, PCRF (Policy and Charging Rule Function) may be used, or another device like an accounting management server may be used as a control device. Further, the functions equivalent of the HLR 5 and the contract information management device 6 may be integrated into one control device such as HLR.

### Industrial Applicability

The present invention is applicable to a communication control system and a communication control method, and it is possible to make communication control on a user-by-user basis who uses a plurality of terminals and thereby enhance the convenience of using a communication service.

### Reference Signs List

1... communication control system, 2a,2b... mobile communication terminal, 3a,3b...SGSN (switch), 4...GGSN (switch), 5...HLR (control device), 32... communication status measurement unit (communication status measurement means), 34... communication history transmitting unit (communication history transmitting means), 52...remaining communication amount information storage unit (remaining communication amount information storage means), 53... communication history receiving unit (communication history receiving means), 54...communication history adding unit (communication history adding means), 55...communication amount comparison unit (communication amount comparison means), 56... restriction signal transmitting unit (restriction signal transmitting means), NW...communication network

## Claims

1. A communication control system including a plurality of switches that relay communication data exchanged between a plurality of terminals and another party and a control device that is connected to the plurality of switches and controls communications between the terminals and the other party,
each of the plurality of switches comprising:
a communication status measurement means for measuring communication history data indicating a communication history between each terminal and the other party; and
a communication history transmitting means for transmitting the communication history data of each terminal measured by the communication status measurement means together with user identification information identifying a user of the terminal to the control device, and
the control device comprising:
a remaining communication amount information storage means for previously storing a plurality of user identification information and remaining communication amount data indicating a remaining amount of communication available in association with each other;
a communication history receiving means for receiving the communication history data with the user identification information added from the plurality of switches;
a communication history adding means for referring to the remaining communication amount information storage means based on a plurality of user identification information received by the communication history receiving means and, when the plurality of user identification information are stored in association with each other, adding up a plurality of communication history data received corresponding to the plurality of user identification information;
a communication amount comparison means for reading the remaining communication amount data corresponding to the plurality of user identification information from the remaining communication amount information storage means and comparing the remaining communication amount data with an added result by the communication history adding means; and
a restriction signal transmitting means for transmitting a control signal for restricting communications by the terminals specified by the plurality of user identification information based on a comparison result acquired by the communication amount comparison means.

2. The communication control system according to Claim 1, wherein
the restriction signal transmitting means transmits a disconnection signal for disconnecting communication connections by the terminals based on the comparison result.

3. The communication control system according to Claim 1, wherein
the restriction signal transmitting means transmits a control signal for controlling a communication speed in communications by the terminals based on the comparison result.

4. A communication control method using a plurality of switches that relay communication data exchanged between a plurality of terminals and another party and a control device that is connected to the plurality of switches and controls communications between the terminals and the other party, the method comprising:
a communication status measurement step of measuring communication history data indicating a communication history between each terminal and the other party by each of the plurality of switches;
a communication history transmitting step of transmitting the communication history data of each terminal measured in the communication status measurement step together with user identification information identifying a user of the terminal to the control device by each of the plurality of switches;
a remaining communication amount information storage step of previously storing a plurality of user identification information and remaining communication amount data indicating a remaining amount of communication available in association with each other into a remaining communication amount information storage means of the control device;
a communication history receiving step of receiving the communication history data with the user identification information added from the plurality of switches by a communication history receiving means of the control device;
a communication history adding step of referring to the remaining communication amount information storage means based on a plurality of user identification information received by the communication history receiving means and, when the plurality of user identification information are stored in association with each other, adding up a plurality of communication history data received corresponding to the plurality of user identification information by a communication history adding means of the control device;
a communication amount comparison step of reading the remaining communication amount data corresponding to the plurality of user identification information from the remaining communication amount information storage means and comparing the remaining communication amount data with an added result by the communication history adding means by a communication amount comparison means of the control device; and
a restriction signal transmitting step of transmitting a control signal for restricting communications by the terminals specified by the plurality of user identification information based on a comparison result acquired by the communication amount comparison means by a restriction signal transmitting means of the control device.
